# EUROPEAN PATENT SPECIFICATION

(11) **EP 2 647 888 B1**
(45) Date of publication and mention of the grant of the patent: **05.08.2015**
(21) Application number: 13159793.2
(22) Date of filing: 18.03.2013
(51) Int. Cl.: F16J 15/02, F16J 15/06

(54) **Adhesive-free seal**
Klebstofffreie Dichtung
Joint sans adhésif

(30) Priority: 02.04.2012 GB 201205892
(43) Date of publication of application: 09.10.2013
(73) Proprietor: BLUEWATER DESIGN ASSOCIATES LIMITED, Rashwood Droitwich Worcestershire WR9 0BW (GB)
(72) Inventor: Kelly, Frank, Droitwich Worcestershire WR9 0PX (GB)
(74) Representative: Jackson, Derek Charles

(56) References cited:
- WO-A1-2004/099509
- WO-A1-2005/052416
- DE-U1- 20 006 571

## Description

This invention relates to an adhesive-free seal.

It is common practice to secure a seal around an object by means of an adhesive. Adhesive, though, is liable to fail, especially in damp and wet environments, such as during or following a flood.

WO2004099509, which constitutes the closest prior art, discloses a liquid barrier assembly for the prevention of flow of liquid from one area to an adjacent area. The assembly comprises at least two barriers each comprising a substantially rigid container and a front wall against which, in use, liquid is intended to be incident. Adjacent barriers are linked by a connector which comprises a first relatively rigid portion and a second relatively deformable portion. The portions are received in respective recesses defined in neighbouring side walls of adjacent barriers. The second portion is deformed upon juxtaposition of adjacent barriers in a predetermined manner so as to form an effective water-tight seal between the barriers. The arrangement is said to be particularly suitable for flood defence barriers.

WO2005052416 discloses an elastomeric seal which provides a corner joint for a sealing assembly. The corner joint provides a three-way sealing effect useful in sealing a plurality of barrier parts to each other and to the surface on which they rest. A corner joint has a corner seal and an end seal. The corner seal has a deformable, convexly-curved outer surface with projections therefrom, which conforms to a concave surface on the end seal so that a water-tight seal is created when they are brought together. Elongate seals may be abutted against the corner seal and end seal so as to provide an inverted 'T'. The seal parts are received into channels in the objects to be sealed, and the surface on which they rest, thus providing a water-tight sealing effect.

It is an object of the present invention to provide an adhesive-free seal which overcomes, or at least ameliorates, the above problems.

According to the present invention there is provided an adhesive-free seal comprising a sealing portion and a retaining portion, both made of a resilient material, the retaining portion being formed on opposing sides thereof with a plurality of longitudinally extending ribs for engaging a side of a recess in which the seal is to be retained, wherein the sealing portion is L-shaped and is connected to the retaining portion mid-way along a lateral arm of the sealing portion.

A sealing aperture may extend within the sealing portion in the longitudinal direction of the seal, the sealing aperture extending the length of the sealing portion. A plurality of sealing apertures may be provided in the sealing portion and may extend the length of the seal. For example, four sealing apertures may be provided, the apertures being evenly spaced across the lateral arm of the sealing portion. The sealing apertures in the sealing portion may be elongate in cross-section, having a major dimension in a direction parallel to an upright arm of the sealing portion and a minor dimension perpendicular thereto. Alternatively, the sealing apertures in the sealing portion may be circular in cross-section.

The upright arm of the sealing portion may be chamfered at the free end thereof.

The retaining portion may have a cross-section which increases in width as the distance from the sealing portion increases.

The ribs may be parallel and may be triangular in configuration with the apex protruding from the remainder of the retaining portion. The two protruding sides of one or more of the triangular shapes may have differing lengths with the side closer to the sealing portion having a shorter length than the side further from the sealing portion.

A retainer aperture may extend the length of the retaining portion. The retainer aperture may be elongate in cross-section, having a major dimension in a direction towards and away from the sealing portion and a minor dimension in a direction lateral to the sealing portion. The retainer aperture in the retaining portion may be tapered such that the minor dimension decreases as the distance from the sealing portion increases. Alternatively, the retainer aperture may have a constant minor dimension.

The lower face of the sealing portion, that is the face remote from the retaining portion, may be ribbed with ribs extending in the longitudinal direction of the seal. The ribs may extend parallel to each other and may be triangular with inclined sides except for the outermost ribs which may have outer sides that are coplanar with sides of the sealing portion.

The sealing portion may be rectangular or square in cross-section.

The present invention also relates to an adhesive-free seal as hereinbefore defined retained in a recess solely by friction.

For a better understanding of the present invention and to show more clearly how it may be carried into effect reference will now be made, by way of example, to the accompanying drawings in which:
Figure 1 is a cross-sectional view of an embodiment of an adhesive-free seal;
Figure 2 is a perspective view of the adhesive-free seal shown in Figure 1;
Figure 3 is a cross-sectional view of the adhesive-free seal of Figures 1 and 2 in use;
Figure 4 is a cross-sectional view of an embodiment of an adhesive-free seal according to the present invention;
Figure 5 is a perspective view of the adhesive-free seal shown in Figure 4; and
Figure 6 is a cross-sectional view of the adhesive-free seal of Figures 4 and 5 in use.

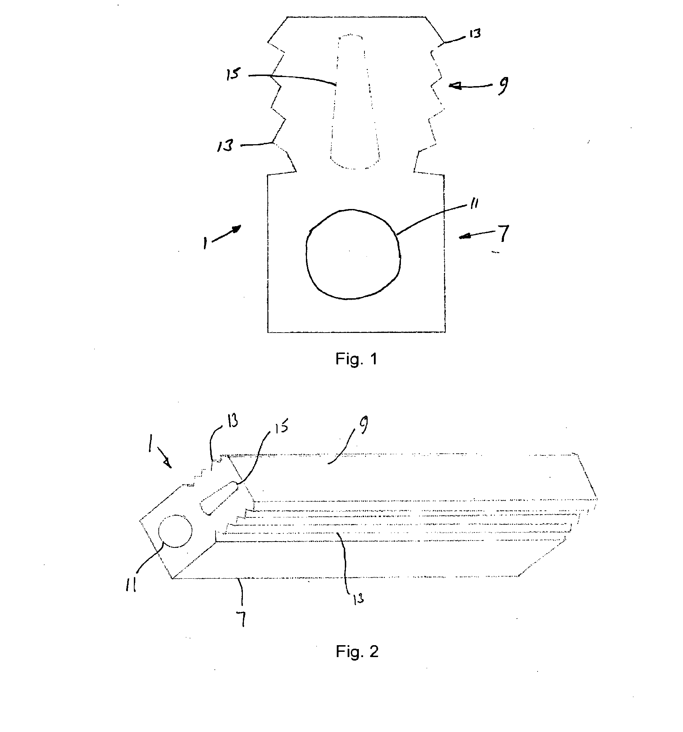

The adhesive-free seal 1 shown in Figures 1 and 2 is designed to be received in a slot 3 in a member 5, such as a frame made of extruded aluminium, without the need for adhesive to retain the seal in position. That is, the seal is retained in the slot 3 solely by friction.

The non-adhesive seal 1 comprises a sealing portion 7 which, in use, extends from the slot 3, and a retaining portion 9 (for example integral with the sealing portion 7) which, in use, is positioned within the slot 3. The sealing portion 7 in Figures 1 to 3 is substantially square in cross-section, although it may have other configurations, such as rectangular. An aperture 11 extends in the longitudinal direction of the seal the length of the sealing portion and is substantially coaxial with the centre of the sealing portion (the centre corresponding to the centre of gravity of the sealing portion). The aperture 11 increases the flexibility of the sealing portion 7.

The retaining portion 9 has a cross-section which increases in width as the distance from the sealing portion 7 increases and is formed along opposing lateral sides with longitudinal ribs 13 extending along the length of the seal. The ribs 13 are substantially parallel and are generally triangular in configuration with the apex protruding from the remainder of the retaining portion. The two protruding sides of one or more of the triangular shapes may have differing lengths with the side closer to the sealing portion 7 having a shorter length than the side further from the sealing portion. An aperture 15 extends the length of the retaining portion 9, the aperture increasing the flexibility of the retaining portion and improving retention of the retaining portion within the slot 3. The aperture 15 is preferably elongate in cross-section, having a major dimension in a direction towards and away from the sealing portion and a minor dimension in a direction lateral to the sealing portion. The aperture 15 may be tapered such that the minor dimension decreases as the distance from the sealing portion 7 increases. Alternatively, the aperture 15 may have a constant minor dimension.

The non-adhesive seal may be made of general purpose, medium density, closed cell EPDM foam which is a durable and cost-effective elastomeric material that is suitable for applications where resistance to ozone, sunlight, ultra-violet and oxidation is important. The closed cell structure makes the material impermeable to air or water.

In use of the adhesive-free seal of Figures 1 and 2, the retaining portion 9 of the seal is pushed into a slot 3 in member 5, the aperture 15 allowing the sides of the retaining portion to flex and the ribs 13 gripping the sides of the slot 3. The elastomeric properties of the retaining portion allowing the retaining portion, and particularly the ribs, to be urged against the sides of the slot and to retain the seal in position with the sealing portion 7 protruding from the slot for sealing purposes. No adhesive is required to retain the seal in position. When used in a sealing context, the member 5 urges the sealing portion 7 against a further surface to seal between the member 5 and the further surface.

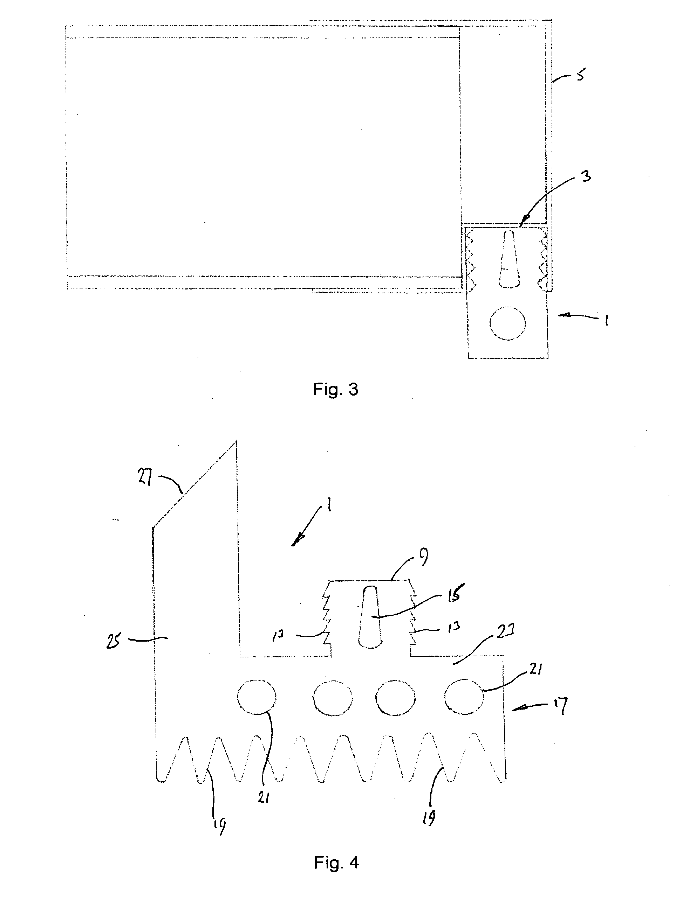

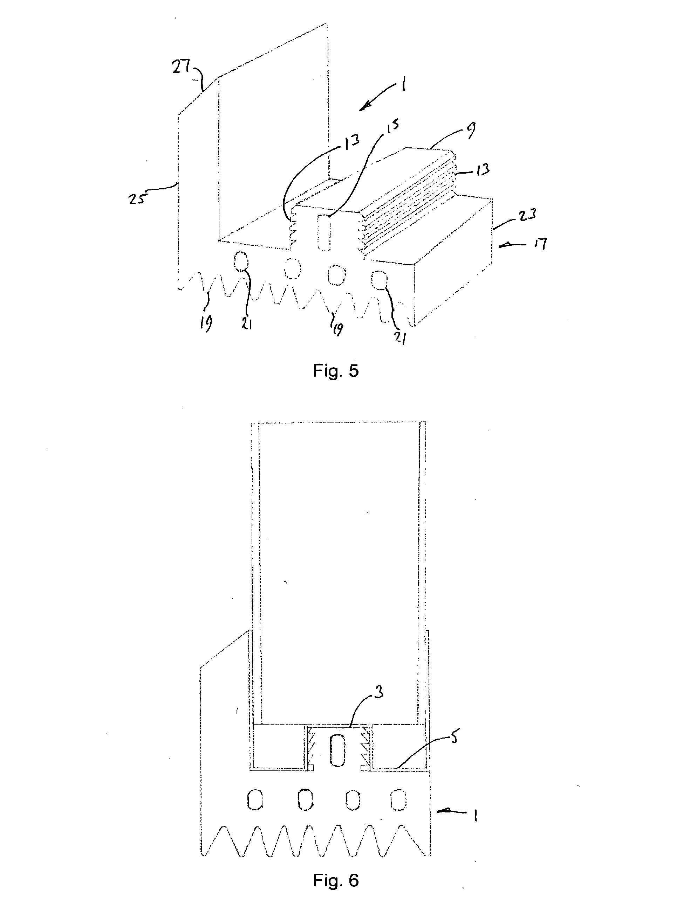

The adhesive-free seal according to the present invention and shown in Figures 4 to 6 is similar to that shown in Figures 1 to 3 and the same references are used to denote the same or similar features. The retaining portion 9 is essentially unchanged, but the sealing portion 17 is substantially L-shaped and is connected to the retaining portion 9 substantially mid-way along the lateral arm 23 of the sealing portion.

The lower face, that is the face remote from the retaining portion 9, is ribbed with ribs 19 extending in the longitudinal direction of the seal. The ribs 19 extend substantially parallel to each other and are substantially triangular with inclined sides except for the outermost ribs which have outer sides that are coplanar with the sides of the sealing portion 17. The ribs 19 assist in sealing against a further surface against which the sealing portion is partially compressed in that, even if water passes a first rib, it is unable to progress further because there is insufficient hydrostatic pressure. Such ribs 19 may be employed irrespective of the configuration of the sealing portion.

A plurality of apertures 21 are provided in the sealing portion 17 and extend the length of the seal. The apertures 21 make the sealing portion more compressible and render the sealing portion less rigid, allowing the seal more readily to conform to the configuration of the further surface and improving the sealing properties. For example, four apertures 21 may be provided, the apertures being substantially evenly spaced across the lateral arm 23 of the sealing portion. The apertures 21 may be elongate in cross-section, having a major dimension in a direction parallel to the upright arm 25 of the sealing portion and a minor dimension perpendicular thereto. Other cross-sectional shapes are also possible, such as circular. The upright arm 25 of the sealing portion 17 is chamfered at the free end 27 thereof.

## Claims

1. An adhesive-free seal (1) comprising a sealing portion (7, 17) and a retaining portion (9), both made of a resilient material, the retaining portion being formed on opposing sides thereof with a plurality of longitudinally extending ribs (13) for engaging a side of a recess (3) in which the seal is to be retained **characterised in that** the sealing portion (17) is L-shaped and is connected to the retaining portion (9) mid-way along a lateral arm (23) of the sealing portion.

2. A seal as claimed in claim, wherein a sealing aperture (21) extends within the sealing portion (17) in the longitudinal direction of the seal, the aperture extending the length of the sealing portion.

3. A seal as claimed in claim 2, wherein a plurality of sealing apertures (21) are provided in the sealing portion (17) and extend the length of the seal.

4. A seal as claimed in claim 3, wherein four sealing apertures (21) are provided spaced evenly across the lateral arm (23) of the sealing portion.

5. A seal as claimed in claim 3 or 4, wherein the sealing apertures (21) in the sealing portion (17) are elongate in cross-section, having a major dimension in a direction parallel to an upright arm of the sealing portion and a minor dimension perpendicular thereto.

6. A seal as claimed in claim 3 or 4, wherein the sealing apertures (21) in the sealing portion (17) are circular in cross-section.

7. A seal as claimed in any preceding claim, wherein the upright arm (25) of the sealing portion (17) is chamfered at the free end (27) thereof.

8. A seal as claimed in any preceding claim, wherein the retaining portion (9) has a cross-section which increases in width as the distance from the sealing portion (17) increases.

9. A seal as claimed in any preceding claim, wherein the ribs (13) are parallel and are triangular in configuration with the apex protruding from the remainder of the retaining portion (9).

10. A seal as claimed in claim 9, wherein the two protruding sides of one or more of the triangular shapes have differing lengths with the side closer to the sealing portion (17) having a shorter length than the side further from the sealing portion.

11. A seal as claimed in any preceding claim, wherein a retainer aperture (15) extends the length of the retaining portion (9).

12. A seal as claimed in claim 11, wherein the retainer aperture (15) is elongate in cross-section, having a major dimension in a direction towards and away from the sealing portion (17) and a minor dimension in a direction lateral to the sealing portion.

13. A seal as claimed in claim 12, wherein the retainer aperture (15) in the retaining portion (9) is tapered such that the minor dimension decreases as the distance from the sealing portion increases or having a constant minor dimension.

14. A seal as claimed in any preceding claim, wherein the lower face of the sealing portion (17), that is the face remote from the retaining portion (9), is ribbed with ribs (19) extending in the longitudinal direction of the seal, for example the ribs extending parallel to each other and being triangular with inclined sides except for the outermost ribs which have outer sides that are coplanar with sides of the sealing portion.

15. A combination of a recess and an adhesive-free seal (1) as claimed in any preceding claim, wherein the seal is retained in a recess (3) solely by friction.

## Patentansprüche

1. Klebstofffreie Dichtung (1), die einen Dichtungsabschnitt (7, 17) und einen Halteabschnitt (9) umfasst, beide aus einem elastischen Material, wobei der Halteabschnitt auf seinen gegenüberliegenden Seiten mit mehreren longitudinal verlaufenden Rippen (13) zum Eingreifen in eine Seite einer Aussparung (3) ausgebildet ist, in der die Dichtung gehalten werden soll,
**dadurch gekennzeichnet, dass** der Dichtungsabschnitt (17) L-förmig und mit dem Halteabschnitt (9) in der Mitte entlang einem seitlichen Arm (23) des Dichtungsabschnitts verbunden ist.

2. Dichtung nach Anspruch 1, wobei ein Dichtungsloch (21) innerhalb des Dichtungsabschnitts (17) in Längsrichtung der Dichtung verläuft, wobei das Loch über die Länge des Dichtungsabschnitts verläuft.

3. Dichtung nach Anspruch 2, wobei mehrere Dichtungslöcher (21) in dem Dichtungsabschnitt (17) vorgesehen sind und über die Länge der Dichtung verlaufen.

4. Dichtung nach Anspruch 3, wobei vier Dichtungslöcher (21) gleichmäßig beabstandet über den seitlichen Arm (23) des Dichtungsabschnitts vorgesehen sind.

5. Dichtung nach Anspruch 3 oder 4, wobei die Dichtungslöcher (21) im Dichtungsabschnitt (17) einen länglichen Querschnitt haben, mit einer größeren Abmessung in einer Richtung parallel zu einem aufrechten Arm des Dichtungsabschnitts und einer kleineren Abmessung lotrecht dazu.

6. Dichtung nach Anspruch 3 oder 4, wobei die Dichtungslöcher (21) im Dichtungsabschnitt (17) einen kreisförmigen Querschnitt haben.

7. Dichtung nach einem vorherigen Anspruch, wobei der aufrechte Arm (25) des Dichtungsabschnitts (17) an seinem freien Ende (27) abgeschrägt ist.

8. Dichtung nach einem vorherigen Anspruch, wobei der Halteabschnitt (9) einen Querschnitt hat, dessen Breite mit zunehmendem Abstand vom Dichtungsabschnitt (17) zunimmt.

9. Dichtung nach einem vorherigen Anspruch, wobei die Rippen (13) parallel und dreieckig konfiguriert sind, wobei der Scheitelpunkt vom Rest des Halteabschnitts (9) vorsteht.

10. Dichtung nach Anspruch 9, wobei die beiden vorstehenden Seiten von einer oder mehreren der dreieckigen Formen unterschiedliche Längen haben, wobei die Seite näher am Dichtungsabschnitt (17) eine kürzere Länge hat als die Seite weiter vom Dichtungsabschnitt entfernt.

11. Dichtung nach einem vorherigen Anspruch, wobei ein Halteloch (15) über die Länge des Halteabschnitts (9) verläuft.

12. Dichtung nach Anspruch 11, wobei das Halteloch (15) einen länglichen Querschnitt hat, mit einer größeren Abmessung in einer Richtung zum Dichtungsabschnitt (17) hin und davon weg und einer kleineren Abmessung in einer Richtung seitlich zu dem Dichtungsabschnitt.

13. Dichtung nach Anspruch 12, wobei sich das Halteloch (15) im Halteabschnitt (9) so verjüngt, dass die kleinere Abmessung mit zunehmendem Abstand vom Dichtungsabschnitt abnimmt, oder mit einer konstanten kleineren Abmessung.

14. Dichtung nach einem vorherigen Anspruch, wobei die Unterseite des Dichtungsabschnitts (17), d.h. die Seite fern vom Halteabschnitt (9), mit Rippen (19) gerippt ist, die in der Längsrichtung der Dichtung verlaufen, wobei die Rippen beispielsweise parallel zueinander verlaufen und dreieckig mit geneigten Seiten sind, mit Ausnahme der äußersten Rippen, die äußere Seiten haben, die koplanar mit Seiten des Dichtungsabschnitts sind.

15. Kombination aus einer Aussparung und einer klebstofffreien Dichtung (1) nach einem vorherigen Anspruch, wobei die Dichtung nur durch Reibung in einer Aussparung (3) gehalten wird.

## Revendications

1. Joint d'étanchéité sans adhésif (1) comprenant une partie d'étanchéité (7, 17) et une partie de retenue (9), toutes deux constituées d'un matériau souple, la partie de retenue comportant sur des côtés opposés une pluralité de nervures disposées longitudinalement (13) pour s'engager avec un côté d'un creux (3) dans lequel le joint doit être retenu, **caractérisé en ce que** la partie d'étanchéité (17) est en forme de L et reliée à la partie de retenue (9) à mi-distance le long d'un bras latéral (23) de la partie d'étanchéité.

2. Joint d'étanchéité selon la revendication 1, dans lequel une ouverture d'étanchéité (21) s'étend à l'intérieur de la partie d'étanchéité (17) dans la direction longitudinale du joint, l'ouverture s'étendant sur la longueur de la partie d'étanchéité.

3. Joint d'étanchéité selon la revendication 2, dans lequel une pluralité d'ouvertures d'étanchéité (21) sont prévues dans la partie d'étanchéité (17) et s'étendent sur la longueur du joint.

4. Joint d'étanchéité selon la revendication 3, dans lequel quatre ouvertures d'étanchéité (21) sont prévues et espacées également en travers du bras latéral (23) de la partie d'étanchéité.

5. Joint d'étanchéité selon la revendication 3 ou 4, dans lequel les ouvertures d'étanchéité (21) dans la partie d'étanchéité (17) ont une section transversale allongée, ayant une dimension majeure dans une direction parallèle à un bras vertical de la partie d'étanchéité et une dimension mineure perpendiculaire audit bras.

6. Joint d'étanchéité selon la revendication 3 ou 4, dans lequel les ouvertures d'étanchéité (21) dans la partie d'étanchéité (17) ont une section transversale circulaire.

7. Joint d'étanchéité selon l'une quelconque des revendications précédentes, dans lequel le bras vertical (25) de la partie d'étanchéité (17) est chanfreiné à son extrémité libre (27).

8. Joint d'étanchéité selon l'une quelconque des revendications précédentes, dans lequel la partie de retenue (9) a une section transversale qui augmente de largeur avec l'augmentation de la distance à la partie d'étanchéité (17).

9. Joint d'étanchéité selon l'une quelconque des revendications précédentes, dans lequel les nervures (13) sont parallèles et sont de configuration triangulaire, la pointe dépassant du reste de la partie de retenue (9).

10. Joint d'étanchéité selon la revendication 9, dans lequel les deux côtés en saillie d'une ou plusieurs des formes triangulaires ont des longueurs différentes, le côté le plus proche de la partie d'étanchéité (17) ayant une longueur plus courte que le côté plus éloigné de la partie d'étanchéité.

11. Joint d'étanchéité selon l'une quelconque des revendications précédentes, dans lequel une ouverture de retenue (15) s'étend sur la longueur de la partie de retenue (9).

12. Joint d'étanchéité selon la revendication 11, dans lequel l'ouverture de retenue (15) a une coupe transversale allongée ayant une dimension majeure dans une direction se rapprochant et s'éloignant de la partie d'étanchéité (17) et une dimension mineure dans une direction latérale par rapport à la partie d'étanchéité.

13. Joint d'étanchéité selon la revendication 12, dans lequel l'ouverture de retenue (15) dans la partie de retenue (9) est biseautée de telle sorte que la dimension mineure diminue avec l'augmentation de la distance à la partie d'étanchéité, ou ayant une dimension mineure constante.

14. Joint d'étanchéité selon l'une quelconque des revendications précédentes, dans lequel la face inférieure de la partie d'étanchéité (17), qui est la face éloignée de la partie de retenue (9), comporte des nervures (19) s'étendant dans la direction longitudinale du joint, les nervures s'étendant par exemple parallèlement entre elles et étant triangulaires avec des côtés inclinés, à part les nervures extrêmes extérieures, qui ont des côtés extérieurs qui sont coplanaires avec les côtés de la partie d'étanchéité.

15. Combinaison d'un creux et d'un joint d'étanchéité sans adhésif (1) selon l'une quelconque des revendications précédentes, dans laquelle le joint est retenu dans un creux (3) seulement par friction.
